# EUROPEAN PATENT SPECIFICATION

(11) **EP 2 739 877 B1**
(45) Date of publication and mention of the grant of the patent: **19.08.2015**
(21) Application number: 11730575.5
(22) Date of filing: 30.06.2011
(51) Int. Cl.: F16G 5/16, C23C 8/32

(54) **FLEXIBLE RING FOR A DRIVE BELT FOR A CONTINUOUSLY VARIABLE TRANSMISSION AND METHOD FOR PRODUCING SUCH**
FLEXIBLER RING FÜR EINEN ANTRIEBSRIEMEN FÜR EIN STUFENLOSES GETRIEBE UND VERFAHREN ZU SEINER HERSTELLUNG
BAGUE FLEXIBLE POUR COURROIE DE TRANSMISSION D'UNE TRANSMISSION À VARIATION CONTINUE ET PROCÉDÉ DE FABRICATION DE CETTE BAGUE

(43) Date of publication of application: 11.06.2014
(73) Proprietor: Robert Bosch GmbH, 70442 Stuttgart (DE)
(72) Inventor: PENNINGS, Bert, NL-5052 CH Goirle (NL)
(74) Representative: Plevier, Gabriel Anton Johan Maria
(86) International application number: PCT/EP2011/003222
(87) International publication number: WO 2013/000491

(56) References cited:
- EP-A1- 1 544 317
- JP-A- 2007 070 696
- US-B1- 6 375 762
- US-B1- 6 406 560

## Description

The present invention relates both to a flexible ring according to the preamble of claim 1 hereinafter and to a method for producing such a flexible ring. The flexible ring is used as a component of a drive belt for a continuously variable transmission for, in particular, automotive use such as in passenger motor cars. The drive belt is typically composed of two sets of mutually concentrically arranged flexible rings that are inserted in a recess of transverse members of the drive belt. The drive belt comprises a plurality of these transverse members that are arranged in mutual succession along the circumference of such ring sets. In such drive application thereof, an individual flexible ring normally has a thickness of only 0.2 mm or less.

In the transmission the drive belt is used for transmitting a driving power between two shafts, whereto the drive belt is passed around two rotatable pulleys, respectively associated with one such transmission shaft and provided with two conical discs defining a circumferential V-groove of the pulley wherein the drive belt is accommodated. By varying an axial separation between the respective discs of the two pulleys in a coordinated manner, the drive belt's radius at each pulley -and hence the rotational speed ratio between the transmission shafts- can be varied, while maintaining the drive belt in a tensioned state. This transmission and drive belt are generally known in the art and are, for example, described in the European patent publication EP-A-1243812.

It is further generally known in art that the performance of the drive belt is directly linked to, not only the combined tensile strength of the ring sets, but to a large extend also the fatigue strength of the individual flexible rings thereof. This is because, during rotation of the drive belt in the transmission, the tension and bending stress in the flexible rings oscillate. In practice it is universally resorted to special steel alloys, in particular maraging steel alloys, as the base material for the flexible rings to realize the desired performance of the drive belt. Additionally to this end, the flexible rings are core hardened and surface (gas-soft) nitrided as part of the standing flexible ring production process. Examples of flexibles rings and the nitriding treatment are given in JP 2007070696 and EP 1544317. A nitriding treatment is disclosed in US 6406560.

A well known and predominantly applied base material in this respect has a nominal composition of 18 mass-% Nickel, 5 mass-% Molybdenum, 16 mass-% Cobalt, 0.4 mass-% Titanium and balance Fe. Although such known maraging steel base material can indeed be processed relatively easily and reliably to form the flexible ring with the required mechanical properties, it does come with the disadvantage that the steel is relatively expensive. In particular, the known maraging steel base material is produced, not only according to exceptional purity requirements -to minimize the formation of (stress raising) non-metallic inclusions-, but also in comparatively small quantities, even on a global scale. Moreover, Cobalt is a rare and, hence, costly alloying element.

Therefore, it is a longstanding desire in the art to develop a base material for the flexible rings that is not only less expensive, but that also can be processed with similar ease and reliability to form flexible rings with similar mechanical properties, in particular fatigue strength, as compared to the known maraging steel base material. In this respect, several alternative steel compositions have been suggested over the years, however, neither one has successfully replaced maraging steel as the base material for the drive belt flexible ring component.

The present invention likewise aims to fulfill the desire of applying a less expensive steel compensation as base material for the flexible rings. According to the invention such aim can be realized by, not only the composition of the base material, but also by implementing a limited, however, essential modification to the ring production process that currently practiced in the art of drive belt manufacture.

The known ring production process includes the heat treatment process step of gas-soft nitriding, i.e. of keeping the ring in a heated chamber with a controlled gas atmosphere that contains ammonia gas. In this process step the ammonia dissociates at the surface of the ring and nitrogen atoms enter the metal lattice of the ring material as interstitials to form a nitrogen containing surface layer in the ring material. This nitrided surface layer increases the surface hardness of the ring, while largely maintaining the favorable elasticity and yield strength of the ring material. As a result the wear and fatigue fracture resistance are notably improved to a level that is required for the drive belt application thereof.

It has been found that when other, i.e. non-cobalt-containing steel compositions, such as in particular chromium-nickel stainless steel compositions, are processed in the above known manner, such known nitrided surface layer does not form, at least not to the same extend or thickness. Simply increasing the intensity (e.g. temperature, ammonia concentration or duration) of the gas-soft nitriding process does not significantly increase the said thickness. As a result, with the known gas-soft nitriding process, the stainless steel ring can not be provided with the favorable material properties for drive belt application that are provided by the known, cobalt-containing maraging steel rings.

According to the invention, the relevant material characteristics of the flexible ring made from the non-cobalt-containing steel can be improved substantially by nitro-carburizing instead of nitriding the flexible ring. The process step of nitro-carburizing is known as such and differs from the gas-soft nitriding process in that the process atmosphere, in addition to only the ammonia gas, also contains a carbon-containing gas, such as carbon monoxide and/or acetylene or ethyne. In this process step, not only nitrogen atoms, but also carbon atoms enter into the metal lattice of the ring material by diffusion, whereby a surface layer is formed that is enriched with both nitrogen and carbon, at least relative to the bulk composition of the ring material.

Further according to the invention, particularly favorable results can be obtained with the range of steel alloys comprising 5-20% by weight chromium and 5-15% by weight nickel with balance iron. These steel alloys can also comprise smaller amounts of less than 5% by weight of other metals, such as molybdenum, copper, aluminum, titanium, manganese and silicon. Particularly good results were obtained with steel alloys further satisfying the requirement of the sum of the nickel content and the chromium content amounting to about 21% by weight, with optimum test results achieved with the alloy containing 12 weight-% chromium, 8.5 weight-% nickel, 2 weight-% copper and 1 weight-% titanium with balance iron.

Yet further, according to the invention, particularly favorable results can be obtained with the nitro-carburizing being performed within the temperature range of 400-550 degrees Centigrade for 0.5 to 2.5 hours and under supply of a process gas containing 5-25 % by volume ammonia and 5-15 % by volume of a carbon-containing gas with balance nitrogen gas.

Yet further, according to the invention, particularly favorable results can be obtained when, in the nitro-carburizing process, the partial-pressure of the carbon-containing gas in the process atmosphere is higher during the initial stages of the nitro-carburizing process as compared to later or even the final stages thereof. This may, for example, be realized in a simple manner by gradually reducing the carbon-content of the process gas.

Yet further, according to the invention, particularly favorable results can be obtained by arranging the nitro-carburizing process such that the carbon concentration shows a (local) maximum, i.e. peaks, at the farthest extend of the nitrogen enriched surface layer of the ring, i.e. at a depth (i.e. perpendicular distance from the outer face of the ring) where the nitrogen concentration diminishes towards zero, or at least towards the bulk concentration of the ring material. In quantitative terms, such local maximum in the carbon content preferably occurs at a depth were the nitrogen content is about 1% by weight, e.g. between 0.5 and 1.5 weight-% N. Preferably, such local maximum in the carbon content amounts to 1% by weight, e.g. between 0.5 and 1.5 weight-% C. As a result, the mechanical properties of the ring material at the transition between the nitro-carburized surface layer and the bulk of the rings is improved, in particular in terms of the local fatigue strength of the ring material.

It was found that, when the present is applied, a stainless steel ring with a nitro-carburized surface layer of only 13 to 23 micron thickness (as determined by the effective diffusion depth of the Nitrogen atoms and/or by the local maximum in the carbon content) provides a similar fatigue strength as the conventional maraging steel ring with a nitrided surface layer of around 25 to 35 micron thickness.

The above-described basic features of the invention will now be elucidated by way of example with reference to the accompanying figures.
Figure 1 is a schematic illustration of a known drive belt and of a transmission incorporating such known belt.
Figure 2 is a schematic illustration of a part of the known drive belt, which includes two sets of a number of flexible rings, as well as a plurality of transverse members.
Figure 3 figuratively represents a known manufacturing method of the flexible ring that includes a process step of nitriding.
Figure 4 figuratively represents the process step of nitro-carburizing according to the invention, as part of the overall manufacturing method of the flexible ring.
Figure 5 is a graph of the local carbon content and the local nitrogen content in the material of the flexible ring produced in accordance with the present invention in relation to a (perpendicular) distance from the surface thereof.
Figure 6 is a graph of the local carbon content and the local nitrogen content in the material of the conventionally produced flexible ring in relation to a distance from the surface thereof.
Figure 7 is a graph of the relative fatigue strength of the flexible ring produced in accordance with the present invention in relation to an average nitrogen and carbon layer thickness.

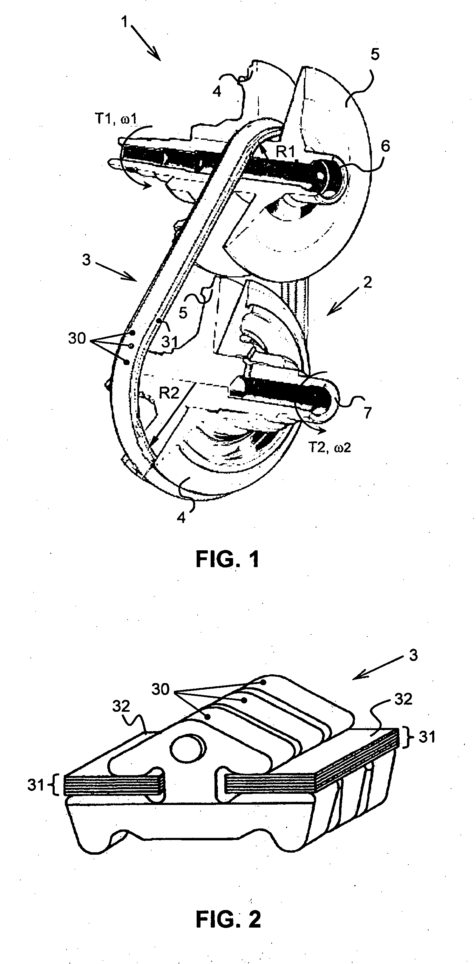

Figure 1 shows schematically a continuously variable transmission (CVT) with a drive belt 3 wrapped around two pulleys 1 and 2. Each pulley 1, 2 is provided with two conical pulley discs 4, 5, where between an annular, predominantly V-shaped pulley groove is defined and whereof one disc 4 is axially moveable along a respective pulley shaft 6, 7 over which it is placed. A drive belt 3 is wrapped around the pulleys 1, 2 for transmitting a rotational movement ω and an accompanying torque T from the one pulley 1, 2 to the other 2, 1. Each pulley 1, 2 generally also comprises activation means that can impose on the said at least one disc 4 thereof an axially oriented clamping force directed towards the respective other pulley disc 5 thereof, such that the belt 3 can be clamped between these discs 4, 5. Also, a (speed) ratio of the CVT between the rotational speed of the driven pulley 2 and the rotational speed of the driving pulley 1 is determined thereby. This CVT is known per se.

An example of a known drive belt 3 is shown in more detail figure 2 in a section thereof. The drive belt 3 is made up of two sets 31 of mutually nested, flat and flexible rings 32 and of a plurality of transverse members 30. The transverse members 30 are arranged in mutual succession along the circumference of the ring sets 31, in such manner that they can slide relative to and in the circumference direction of the ring sets 31.

The transverse segments 30 take-up the said clamping force, such when an input torque T is exerted on the so-called driving pulley 1, friction between the discs 4, 5 and the belt 3, causes a rotation of the driving pulley 1 to be transferred to the so-called driven pulley 2 via the likewise rotating drive belt 3.

During operation in the CVT the drive belt 3 and in particular the flexible rings 32 thereof are subjected to a cyclically varying tensile and bending stresses, i.e. a fatigue load. Typically the resistance against metal fatigue, i.e. the fatigue strength of the flexible rings 32, thus determines the functional life span of the drive belt 3. Therefore, it has been a long standing and general development aim to optimize the fatigue strength of the flexible ring 32 at a minimum combined material and processing cost.

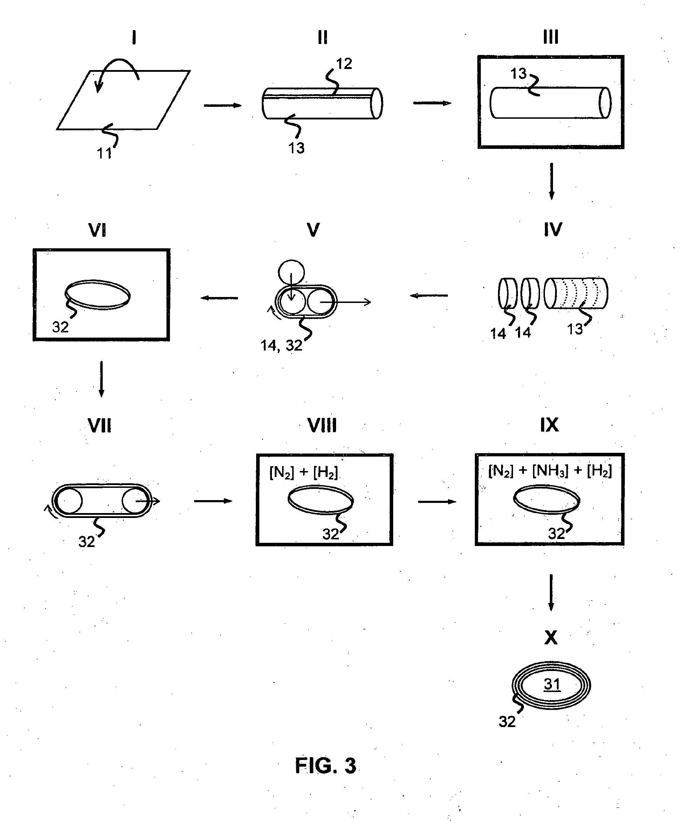

Figure 3 illustrates a relevant part of the known manufacturing method for the drive belt ring set 31, as it is typically applied in the art for the production of metal drive belts 3 for automotive application. The separate process steps of the known manufacturing method are indicated by way of Roman numerals.

In a first process step I a thin sheet or plate 11 of a maraging steel base material having a thickness of around 0.4 mm is bend into a cylindrical shape and the meeting plate ends 12 are welded together in a second process step II to form a hollow cylinder or tube 13. In a third step III of the process, the tube 13 is annealed. Thereafter, in a fourth process step IV, the tube 13 is cut into a number of annular hoops 14, which are subsequently -process step five V- rolled to reduce the thickness thereof to, typically, 0.2 mm, while being elongated. After rolling, the hoops 14 are usually referred to as flexible rings 32.

The flexible ring 32 is subjected to a further, i.e. ring annealing process step VI for removing the work hardening effect of the previous rolling process step by recovery and re-crystallization of the ring material at a temperature considerably above 600 degree Celsius, e.g. about 800 degree Celsius. Thereafter, in a seventh process step VII, the flexible ring 32 is calibrated by mounting it around two rotating rollers and stretching it to a predefined circumference length by forcing the said rollers apart. In this seventh process step VII, also internal stresses are imposed on the flexible ring 32.

Thereafter, the flexible ring 32 is heat-treated in two separate process steps, namely an eighth process step VIII of ageing or bulk precipitation hardening and a ninth process step IX of nitriding or case hardening. More in particular, both such heat-treatments involve heating the flexible ring 32 in a chamber containing a controlled gas atmosphere. In case of ageing, the process atmosphere in the chamber is typically composed of nitrogen and some, e.g. up to 5 volume-%, hydrogen. In case of nitriding, the process gas also contains ammonia gas that, in the chamber, i.e. in the process atmosphere, decomposes at the surface of the metal ring into Hydrogen gas and Nitrogen atoms. Both these heat-treatments typically occur within the temperature range from 400 degrees Celsius to 500 degrees Celsius and can each last for about 45 to over 120 minutes in dependence on the base material (maraging steel alloy composition) for the flexible ring 32, as well as on the mechanical properties desired therefor. In this latter respect it is remarked that, typically, it is aimed at a ring core hardness value of 520 HV1.0 or more, a ring surface hardness value of 875 HV0.1 or more and at a thickness of the nitrided ring surface layer, alternatively denoted nitrogen diffusion zone, in the range from 25 to 35 micron.

It is noted that it is known in the art to perform both such heat-treatments simultaneously, i.e. in a single chamber.

Finally, the ring set 31 is formed by radially stacking, i.e. concentrically nesting, a number of thus formed and processed flexible rings 32, as is further indicated in figure 3 in the tenth and final process step X depicted therein. Since only a small positive or negative clearance is allowed between neighboring flexible rings 32, each flexible ring 32 of the ring set 31 is required to be suitably dimensioned in relation to the other rings 32 thereof. To this end, the individual flexible rings 32 of the ring set 31 are typically selected from a stock of flexible rings 32 of accurately known circumference length.

Because some alloying elements of maraging steel are relatively expensive, it has already been tried in the art to replace the maraging steel base material by a cheaper type of steel such as stainless steel. For example, the Japanese patent publications No. 2002-053936 and No. 2000-063998 concern proposals for non-cobalt-containing steel compositions as the base material for the drive belt flexible ring component 32. However, such alternative steel compositions have proven unsatisfactory for the present automotive drive belt application, or at least perform inferior to the current maraging steel compositions. Still, according to the present invention, such performance of at least some of the non-cobalt-containing steel compositions can be significantly and satisfactory improved by a surprisingly small and easy to implement modification of the production process of the flexible ring 32.

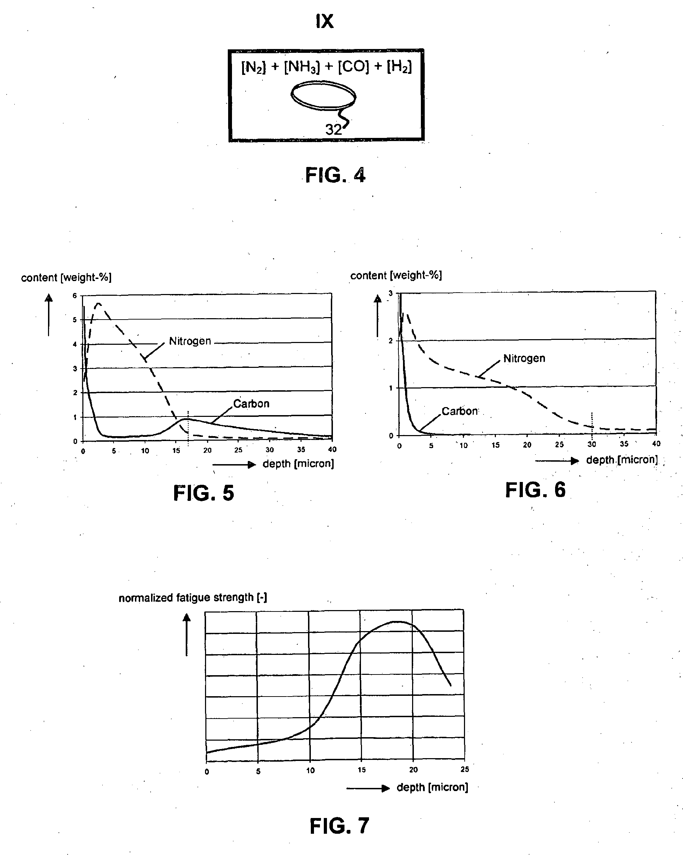

According to the invention, the material characteristics of a non-cobalt-containing steel such as stainless steel are substantially improved, in particular in relation to the present CVT drive belt application thereof, by nitro-carburizing in stead of nitriding the flexible rings 32 in the ninth step IX of the above-described overall manufacturing method, as is diagrammatically illustrated in figure 4. This heat treatment process of nitro-carburizing is as such well-known and differs from gas-soft nitriding in that the process gas contains a carbon-containing or endo-gas, such as carbon monoxide and/or acetylene, in addition to the ammonia gas. In nitro-carburizing the flexible rings 32, not only nitrogen atoms but also carbon atoms enter into the metal lattice of the ring material by diffusion. Hereby a surface layer of the flexible rings 32 is formed that is enriched with both nitrogen and carbon atoms.

Further according to the invention, during the nitro-carburizing process step IX the composition of the process gas, in particular the carbon content thereof, is changed to create a local maximum in the carbon content of the ring material, which concentration peak occurs at a distance from the outer surface of the flexible ring 32 that essentially corresponds to the extend, i.e. thickness of the nitrogen-enriched surface layer thereof. This preferred embodiment of the invention is illustrated in figure 5 by way of a graph.

In the graph of figure 5 such preferred local carbon content of the material of the end-product flexible ring 32 (solid line) is plotted in relation to the corresponding local nitrogen content (dashed line). In the graph, the X-axis coordinate represents the depth or distance from the ring surface (in micron) and the Y-axis coordinate represents the relevant, partial, content (in weight-%).

In figure 5, the extend of the nitro-carburized surface layer of the flexible ring 32 produced in accordance with the present invention is indicated by the dotted vertical line. According to figure 5, the nitro-carburized surface layer is approximately 17 micron thick or deep, at which depth the nitrogen content approaches zero and a local maximum or peak of about 1 weight-% in the local carbon content occurs, likewise in accordance with the present invention.

A similar graph, however determined for the conventionally produced, i.e. nitrided-only flexible ring 32 is provided by figure 6 for comparison. According to this figure 6, the nitrided surface layer of the conventional flexible ring 32, i.e. produced in accordance with the known manufacturing method of figure 3, is approximately 30 micron thick or deep, as again indicated by the dotted vertical line, and no peak occurs in local carbon content that, instead, simply reduces rapidly to zero within 5 micron from the ring surface.

Finally, the graph of figure 7 provides an experimentally determined dependency of the observed (normalized) fatigue strength of the flexible ring 32 produced in accordance with the present invention on the depth (thickness) of the nitrided and carburized surface layer. The graph of figure 7 shows the occurrence of an maximum fatigue strength at a layer thickness of approximately 18 micron. Based on this graph and in comparison with the conventional flexible ring 32 it is concluded that in the nitro-carburizing process in accordance with the invention optimum results are obtained with a nitro-carburized layer thickness of in-between 13 and 23 micron.

The invention will now be defined further along a set of claims and, apart from the preceding description, also relates to all details therein, and to all details and aspects in the discussed drawing that may not be described, but that are directly and unambiguously derivable there from, at least by a person skilled in the art

## Claims

1. Flexible ring (32) made from steel comprising 5-20% by weight chromium and 5-15% by weight nickel for use in a drive belt (3) for a continuously variable transmission having an nitrogen enriched surface layer that is also enriched with carbon, at least relative to the bulk composition of the steel, **characterized in that** the nitrogen content of the surface layer becomes less than 1.5 % by weight, i.e. approaches zero, at a perpendicular distance of 13 to 23 micron from the outer surface of the ring (32), at which distance from the outer surface of the ring (32) the carbon content of the surface layer reaches a local maximum amounting to in-between 0.5 and 1.5 % by weight.

2. Flexible ring (32) according to claim 1, **characterized in that** the steel further comprises less than 5% by weight molybdenum, copper, aluminium, titanium and/or manganese.

3. Flexible ring (32) according to claim 2, **characterized in that**, apart from any inevitable impurities and/or contaminations, the ring (32) is made from a steel with around 12 weight-% chromium, 8.5 weight-% nickel, 2 weight-% copper and 1 weight-% titanium with balance iron.

4. Heat treatment process (IX) in a manufacturing method for a flexible ring (32) for use in a drive belt (3) wherein the ring (32) is made from steel comprising 5-20% by weight chromium and 5-15% by weight nickel and is held in a chamber at a temperature of between 400 and 550 degrees centigrade for a duration of between 30 and 150 minutes, which chamber is supplied with a process gas mix of between 5 and 25 % by volume ammonia and between 5 and 15 % by volume of a carbon-containing gas, with balance nitrogen gas.

5. Heat treatment process (IX) according to claim 4, **characterized in that** a partial-pressure of the carbon-containing gas in the said process atmosphere is reduced in and as part of the said process (IX).

6. Heat treatment process (IX) according to claim 4 or 5, **characterized in that** in the said process (IX) the ring (32) is provided with a nitrogen and carbon enriched surface layer, at least relative to the bulk composition of the ring material.

7. Heat treatment process (IX) according to claim 6, **characterized in that**, at a location where the nitrogen content of the surface layer approaches zero, the carbon content reaches a local maximum.

8. Heat treatment process (IX) according to claim 6 or 7, **characterized in that**, at a location where the nitrogen content of the surface layer amounts to in-between 0.5 and 1.5 % by weight, the carbon content likewise amounts to in-between 0.5 and 1.5 % by weight.

9. Heat treatment process (IX) according to claim 6, 7 or 8 **characterized in that** the nitrogen content of the surface becomes less than 1.5 % by weight, i.e. approaches zero, at a perpendicular distance of 13 to 23 micron from the outer surface of the ring (32).

10. Heat treatment process (IX) according to claim 9, **characterized in that** the steel further comprises less than 5% by weight molybdenum, copper, aluminum, titanium and/or manganese.

11. Heat treatment process (IX) according to claim 10, **characterized in that**, apart from any inevitable impurities and/or contaminations, the ring (32) is made from a steel with around 12 weight-% chromium, 8.5 weight-% nickel, 2 weight-% copper and 1 weight-% titanium with balance iron.

## Patentansprüche

1. Flexibler Ring (32), der aus Stahl besteht, der 5-20 Gewichts-% Chrom und 5-15 Gewichts-% Nickel aufweist, zur Verwendung in einem Antriebsriemen (3) für ein stufenloses Getriebe, der mindestens relativ zur Zusammensetzung des Hauptteils des Stahls eine stickstoffangereicherte Oberflächenschicht aufweist, die außerdem mit Kohlenstoff angereichert ist, **dadurch gekennzeichnet, dass** der Stickstoffgehalt der Oberflächenschicht bei einem senkrechten Abstand von 13 bis 23 Mikrometer von der Außenfläche des Rings (32) kleiner als 1,5 Gewichts-% wird, d.h. sich null nähert, wobei bei diesem Abstand von der Außenfläche des Rings (32) der Kohlenstoffgehalt der Oberflächenschicht ein lokales Maximum erreicht, das zwischen 0,5 und 1,5 Gewichts-% beträgt.

2. Flexibler Ring (32) nach Anspruch 1, **dadurch gekennzeichnet, dass** der Stahl ferner weniger als 5 Gewichts-% Molybdän, Kupfer, Aluminium, Titan und/oder Mangan aufweist.

3. Flexibler Ring (32) nach Anspruch 2, **dadurch gekennzeichnet, dass** neben unvermeidbaren Fremdbestandteilen und/oder Verunreinigungen der Ring (32) aus einem Stahl mit etwa 12 Gew.-% Chrom, 8,5 Gew.-% Nickel, 2 Gew.-% Kupfer und 1 Gew.-% Titan und dem Rest Eisen besteht.

4. Wärmebehandlungsprozess (IX) in einem Herstellungsverfahren für einen flexiblen Ring (32) zur Verwendung in einem Antriebsriemen (3), wobei der Ring (32) aus Stahl besteht, der 5-20 Gewichts-% Chrom und 5-15 Gewichts-% Nickel aufweist, und in einer Kammer bei einer Temperatur zwischen 400 und 550 Grad Celsius für eine Dauer zwischen 30 und 150 Minuten gehalten wird, wobei die Kammer mit einem Prozessgasgemisch von zwischen 5 und 25 Volumen-% Ammoniak und zwischen 5 und 15 Volumen-% eines kohlenstoffhaltigen Gases und dem Rest Stickstoffgas versorgt wird.

5. Wärmebehandlungsprozess (IX) nach Anspruch 4, **dadurch gekennzeichnet, dass** ein Partialdruck des kohlenstoffhaltigen Gases in der Prozessatmosphäre in dem und als Teil des Prozess/es (IX) reduziert wird.

6. Wärmebehandlungsprozess (IX) nach Anspruch 4 oder 5, **dadurch gekennzeichnet, dass** im Prozess (IX) der Ring (32) mindestens relativ zur Zusammensetzung des Hauptteils des Ringmaterials mit einer stickstoff- und kohlenstoffangereicherten Oberflächenschicht versehen wird.

7. Wärmebehandlungsprozess (IX) nach Anspruch 6, **dadurch gekennzeichnet, dass** an einer Stelle, wo sich der Stickstoffgehalt der Oberflächenschicht null nähert, der Kohlenstoffgehalt ein lokales Maximum erreicht.

8. Wärmebehandlungsprozess (IX) nach Anspruch 6 oder 7, **dadurch gekennzeichnet, dass** an einer Stelle, wo der Stickstoffgehalt der Oberflächenschicht zwischen 0,5 und 1,5 Gewichts-% beträgt, der Kohlenstoffgehalt ebenfalls zwischen 0,5 und 1,5 Gewichts-% beträgt.

9. Wärmebehandlungsprozess (IX) nach Anspruch 6, 7 oder 8, **dadurch gekennzeichnet, dass** bei einem senkrechten Abstand von 13 bis 23 Mikrometer von der Außenfläche des Rings (32) der Stickstoffgehalt der Oberfläche kleiner als 1,5 Gewichts-% wird, d.h. sich null nähert.

10. Wärmebehandlungsprozess (IX) nach Anspruch 9, **dadurch gekennzeichnet, dass** der Stahl ferner weniger als 5 Gewichts-% Molybdän, Kupfer, Aluminium, Titan und/oder Mangan aufweist.

11. Wärmebehandlungsprozess (IX) nach Anspruch 10, **dadurch gekennzeichnet, dass** neben unvermeidbaren Fremdbestandteilen und/oder Verunreinigungen der Ring (32) aus einem Stahl mit etwa 12 Gew.-% Chrom, 8,5 Gew.-% Nickel, 2 Gew.-% Kupfer und 1 Gew.-% Titan und dem Rest Eisen besteht.

## Revendications

1. Bague flexible (32) constituée d'un acier contenant entre 5 % en poids et 20 % en poids de chrome et entre 5 % en poids et 15 % en poids de nickel, à utiliser dans une corroie de transmission (3) d'une transmission à variation continue, présentant une couche de surface enrichie en azote qui est également enrichie en carbone, au moins par rapport à la composition brute de l'acier, caractérisée en ce la teneur en azote de la couche de surface devient inférieure à 1,5 % en poids, c'est-à-dire se rapproche de zéro, à une distance perpendiculaire comprise entre 13 microns et 23 microns de la surface extérieure de la bague (32), distance par rapport à la surface extérieure de la bague (32) à laquelle la teneur en carbone de la couche de surface atteint un maximum local qui est compris entre 0,5 % en poids et 1,5 % en poids.

2. Bague flexible (32) selon la revendication 1, **caractérisée en ce que** l'acier contient en outre moins de 5 % en poids de molybdène, de cuivre, d'aluminium et de titane et/ou de manganèse.

3. Bague flexible (32) selon la revendication 2, **caractérisée en ce que**, à part les inévitables impuretés et/ou contaminations, la bague (32) est constituée d'un acier contenant environ 12 % en poids de chrome, 8,5 % en poids de nickel, 2 % en poids de cuivre et 1 % en poids de titane, le reste étant du fer.

4. Procédé de traitement thermique (IX) dans un procédé de fabrication d'une bague flexible (32) à utiliser dans une courroie de transmission (3), dans lequel la bague (32) est constituée d'un acier contenant entre 5 % en poids et 20 % en poids de chrome et entre 5 % en poids et 15 % en poids de nickel, et est maintenue dans une chambre à une température comprise entre 400 degrés centigrades et 550 degrés centigrades pendant une durée comprise entre 30 minutes et 150 minutes, ladite chambre étant alimentée avec un mélange de gaz de traitement contenant entre 5 % en volume et 25 % en volume d'ammoniac et entre 5 % en volume et 15 % en volume de gaz contenant du carbone, le reste étant de l'azote gazeux.

5. Procédé de traitement thermique (IX) selon la revendication 4, **caractérisé en ce qu'**une pression partielle du gaz contenant du carbone dans ladite atmosphère de traitement est réduite pendant et comme partie dudit procédé (IX).

6. Procédé de traitement thermique (IX) selon la revendication 4 ou 5, **caractérisé en ce que** dans ledit procédé (IX), la bague (32) est pourvue d'une couche de surface enrichie en azote et en carbone, au moins par rapport à la composition brute du matériau constituant la bague.

7. Procédé de traitement thermique (IX) selon la revendication 6, **caractérisé en ce que**, en un endroit auquel la teneur en azote de la couche de surface se rapproche de zéro, la teneur en carbone atteint un maximum local.

8. Procédé de traitement thermique (IX) selon la revendication 6 ou 7, **caractérisé en ce que**, en un endroit où la teneur en azote de la couche de surface est comprise entre 0,5 % en poids et 1,5 % en poids, la teneur en carbone est pareillement comprise entre 0,5 % en poids et 1,5 % en poids.

9. Procédé de traitement thermique (IX) selon la revendication 6, 7 ou 8, **caractérisé en ce que** la teneur en azote de la surface devient inférieure à 1,5 % en poids, c'est-à-dire se rapproche de zéro, à une distance perpendiculaire comprise entre 13 microns et 23 microns de la surface extérieure de la bague (32).

10. Procédé de traitement thermique (IX) selon la revendication 9, **caractérisé en ce que** l'acier contient en outre moins de 5 % en poids de molybdène, de cuivre, d'aluminium et de titane et/ou de manganèse.

11. Procédé de traitement thermique (IX) selon la revendication 10, **caractérisé en ce que**, à part les inévitables impuretés et/ou contaminations, la bague (32) est constituée d'un acier contenant environ 12 % en poids de chrome, 8,5 % en poids de nickel, 2 % en poids de cuivre et 1 % en poids de titane, le reste étant du fer.
